# EUROPÄISCHE PATENTSCHRIFT

(11) **EP 1 886 055 B1**
(45) Veröffentlichungstag und Bekanntmachung des Hinweises auf die Patenterteilung: **14.07.2010**
(21) Anmeldenummer: 06724560.5
(22) Anmeldetag: 25.04.2006
(51) Int. Cl.: F16L 3/10, F16L 3/22

(54) **HALTER FÜR SCHLÄUCHE ODER ROHRE**
HOLDER FOR HOSES OR PIPES
SUPPORT DE TUYAUX FLEXIBLES OU TUBES

(30) Priorität: 31.05.2005 DE 102005025360
(43) Veröffentlichungstag der Anmeldung: 13.02.2008
(73) Patentinhaber: Flexa GmbH & Co. Produktion und Vertrieb KG, 63456 Hanau (DE)
(72) Erfinder: FIEBER, Dieter, 63512 Hainburg (DE); KUCHENBROD, Frank, 63456 Hanau (DE)
(74) Vertreter: Grimm, Ekkehard
(86) Internationale Anmeldenummer: PCT/EP2006/003816
(87) Internationale Veröffentlichungsnummer: WO 2006/128526

(56) Entgegenhaltungen:
- WO-A-2004/029492
- DE-A1- 10 023 376
- GB-A- 544 618
- US-A- 4 597 140
- US-A- 5 992 802
- PATENT ABSTRACTS OF JAPAN Bd. 1996, Nr. 10, 31. Oktober 1996 (1996-10-31) -& JP 08 145242 A (FURUKAWA ELECTRIC CO LTD:THE), 7. Juni 1996 (1996-06-07)

## Beschreibung

Die vorliegende Erfindung betrifft einen Halter für Schläuche oder Rohre.

Die GB544618 offenbart einen Halter für Schläuche oder Rohre mit einem Unterteil und einem darauf aufgesetzten Oberteil, die durch im Wesentlichen identische Teile gebildet sind, wobei sowohl Unterteil als auch Oberteil im Bereich einer Verbindungsfläche jeweils eine kreisbogenförmige Nut aufweisen, die sich zu einer einen Schlauch oder ein Rohr aufnehmende Aufnahmeöffnung ergänzen, wobei im Bereich der Verbindungsfläche von Oberteil und Unterteil jeweils mindestens ein Zapfen und jeweils mindestens eine Bohrung ausgebildet sind, die ineinandergreifende Elemente bilden, wobei der Zapfen bzw. die Bohrung auf der einen Seite zu einer senkrechten Mittelebene, die senkrecht zu der Verbindungsfläche verläuft, einer korrespondierenden Bohrung bzw. einem korrespondierenden Zapfen auf der anderen Seite der Mittelebene entspricht, und wobei Montagebohrungen ausgebildet sind, um zumindest das Unterteil an einer Montagestelle zu montieren, wobei die Zapfen und Bohrungen formschlüssig ineinandergreifen.

Derartige Halter sind in einer Vielzahl von Arten bekannt, die dazu eingesetzt werden, Schläuche oder Rohre, Leitungen, und dergleichen, an Wandfläche, an Deckenflächen oder anderen Unterlagen, wie beispielsweise Trägem, unter anderem auch im Bereich des Fahrzeugbaus, anzuordnen, um Schläuche oder Rohre zu haften, in denen elektrische, pneumatische oder sonstige Versorgungsleitungen geführt werden. Diese Halter sind insbesondere für hohe Belastungen ausgelegt, wie sie beispielsweise bei Lastkraftwagen/Schienenfahrzeugen, oder auch im Bereich von Maschinen auftreten.

Üblicherweise bestehen solche Halter aus einem Unterteil, das an einer Grundfläche montiert wird und eine kreisbogenförmige Nut aufweist, in die ein Rohr oder Schlauch eingelegt wird. Diese Halter werden in Abständen an der Grundfläche montiert, um Schläuche oder Rohre unter vorgegebenen Abständen zu halten. Die kreisbogenförmige Nut des Unterteils wird dann mit einem Oberteil, das auf das Unterteil aufgesetzt wird, verschlossen, so dass der in dem Halter aufgenommene Schlauch oder das Rohr allseitig umschlossen sind.

Ein Halter der vorstehend beschriebenen Art ist aus der DE-C1 198 56 945 bekannt. Dieser Schlauchhalter aus Kunststoff besitzt ein Oberteil, das an dem Unterteil mittels Filmscharnier einstückig sowie schwenkbar angeordnet ist. Dieses Oberteil wird an seiner dem Scharnier gegenüberliegenden Seite durch eine Kralle, in einer entsprechenden Nut an dem Unterteil, gehalten. Das Unterteil weist weiterhin auf seiner unteren Bodenfläche, an der das Unterteil an einer Unterlage befestigt wird, eine Schiene mit übergreifenden Randbereichen auf, die als Halteelemente zum Befestigen des Unterteils an einer Unterlage eingesetzt werden können. Das Schienenelement an der Unterseite des Halters kann insbesondere auch dazu verwendet werden, mehrere solcher Halter übereinander zu stapeln und miteinander zu verbinden, indem in die Nut der Schiene an der Unterseite eines solchen Halters ein entsprechend im Querschnitt T-förmig ausgebildetes Halteteil eingeschoben wird.

Die WO 2004/029492 A1 beschreibt eine Rohrschelle, bei der, entsprechend dem vorstehend angegebenen Dokument, das Oberteil mittels Scharnier schwenkbar an dem Unterteil angeordnet ist. Zum Befestigen des Unterteils auf einer Unterlage ist in der Mitte des Unterteils eine durchgehende Bohrung vorgesehen, um in diese Unterlage ein Befestigungsmittel, beispielsweise eine Schraube, einzusetzen. In den beiden Randbereichen des Halters sind weitere Bohrungen vorgesehen, die sowohl durch das Unterteil als auch durch das Oberteil hindurchführen, um zusätzliche Befestigungspunkte zu bilden.

Während die Halter der beiden vorstehend angegebenen Dokumente in einer Seitenansicht quadratisch oder rechteckig sind, so dass die Bodenfläche des Unterteils und die Oberseitenfläche des Oberteils parallel zueinander verlaufen, um mehrere solcher Halter übereinander zu stapeln, ist in der EP 0 736 713 A1 ein Halter dargestellt, der ein Unterteil und ein mit einem Scharnier daran befestigtes Oberteil, das aufklappbar ist, zeigt, bei dem allerdings das Oberteil kreisbogenförmig ausgebildet ist, so dass sich bei einem geschlossenen Halter eine abgerundete Oberseitenfläche ergibt.

Die DE 298 17 993 U1 beschreibt einen Halter, bei dem ein Unterteil so ausgebildet ist, dass die Nut zur Aufnahme eines Schlauchs oder Rohrs eine verengte Eingangsöffnung besitzt, derart, dass die Durchgangsbreite dieser Eingangsöffnung geringer ist als der Durchmesser des darin einzusetzenden Rohres oder Schlauches, so dass ein Schlauch in dieses Unterteil eingeklemmt werden kann und auch ohne ein darauf aufgesetztes Oberteil gehalten wird. Die Bereiche der Eingangsöffnungen dieses Unterteils sind federnd oder nachgiebig ausgebildet, so dass sich diese Durchgangsöffnung beim Einsetzen eines Schlauchs oder eines Rohrs reversibel vergrößert. In einer Ausführungsvarianten kann, nachdem ein Schlauch oder Rohr in dieses Unterteil eingesetzt wird, ein Passstück in die Durchgangsöffnung, zwischen die federnden Bereiche, eingedrückt werden, um die Aufnahmeöffnung des Schlauches zu verschließen. Mehrere solcher Halter können übereinander gestapelt werden. Im Radbereich dieses Halters sind Durchgangsbohrungen ausgebildet, um den Halter an einer Unterlage zu verschrauben.

Die DE 38 18 362 C2 beschreibt eine Rohrschelle, die eine annähernde U-Form besitzt. Dieser U-förmige Träger wird so an einer Unterlage befestigt, dass die Unterlage die Öffnung verschließt, so dass ein Schlauch oder ein Rohr darin gehalten wird.

Ein weiterer U-förmiger Halter oder Träger ist aus der DE 44 35 177 C2 bekannt; die beiden Schenkel des U-förmigen Trägers sind so ausgebildet, dass ein Rohr oder Schlauch mit mehr als 180° seines Umfangs umschlossen wird, so dass ein Schlauch oder Rohr, der bzw. das in einen solchen Halter eingelegt ist, ohne ein Oberteil klemmend gehalten wird. Die beiden Schenkel des U-förmigen Trägers können sich beim Einlegen eines Schlauchs oder Rohrs nach außen biegen und kehren reversibel nach Einlegen eines Schlauchs oder Rohrs wieder in ihre Ausgangsstellung zurück. Ein ähnlicher Halter ist auch aus der AT-Patentschrift Nr. 356986 bekannt.

Die vorstehend beschriebenen Halter sind, sofern sie ein Oberteil und ein Unterteil aufweisen, in ihrer Konstruktion aufwendig, insbesondere dann, wenn das Oberteil mit einem Filmscharnier, oder dergleichen, an dem Unterteil gehalten wird. Sofern nur ein Unterteil vorgesehen ist, sind solche Halter nur bedingt übereinander stapelfähig. Auch ist nicht sichergestellt, dass sich, unter erhöhter Krafteinwirkung, die Rohre oder Schläuche, die mit diesen Haltern gehalten sind, nicht aus dem Halter lösen.

Bei den Haltern, die in der GB 544 618 A beschrieben sind, handelt es sich um Isolierschellen oder Führungsklemmen für Rohre, Kabel, und dergleichen. Die Halter können übereinander gestapelt werden, wobei zum Zentrieren eine kleine Erhebung und eine korrespondierende Vertiefung auf der Oberseite bzw. Unterseite sowie auch auf den Verbindungsflächen des Oberteils und des Unterteils eines Halters vorgesehen sind. Die Erhebungen sind massiv ausgebildet und am Ende abgerundet.

Die US 5,992,802 A beschreibt einen Kabelträger mit einzelnen Haltern, die jeweils aus einem Oberteil und einem Unterteil zusammengesetzt sind. Im Bereich der Verbindungsflächen sind jeweils ineinandergreifende kleine Zapfen und eine entsprechende Bohrung vorgesehen. Übereinander gestapelte Halter werden durch Rippen zentriert gehalten, wobei die Rippen auf der Oberseite eines Halters und die Rippen auf der Unterseite eines darauf liegenden Halters ineinandergreifen.

Die DE 100 23 376 A1 beschreibt eine Klemme zur Befestigung einer Mehrzahl von Schlauch- oder Rohrleitungen, die aus zwei Klemmkörper gebildet ist. Jeder Klemmkörper besitzt halbrunde Ausnehmungen, die sich dann, wenn die beiden Klemmkörper aufeinander gesetzt sind, zu kreisförmigen Durchgängen ergänzen. Im Bereich der der Verbindungsflächen der beiden Klemmkörper sind weiterhin Vorsprünge und Vertiefungen vorgesehen, die ineinander greifen und die beiden Klemmkörper zentrieren. Die Klemmkörper können über Befestigungsbohrungen auf einer Unterlage verschraubt werden.

Die US 4 597 140 A beschreibt eine Rohrklemme mit einem Oberteil und einem Unterteil, die identisch aufgebaut sind und kreuzförmige Vertiefungen aufweisen, so dass wahlweise ein Rohr in zwei senkrecht zueinander verlaufenden Positionen montiert werden kann. Die beiden Teile besitzen an den Ecken Zentriervorsprünge bzw. korrespondierende Vertiefungen. Beide Teile können miteinander fest verschraubt werden.

Patent Abstracts of Japan Bd. 1986, Nr. 10, 31. Oktober 1996 (1996-10-31) -& JP 08 145242 A (FURUKAWA ELECTRIC CO LTD:THE), 7. Juni 1996 (1996-06-07), beschreibt eine Halteeinrichtung für die parallele Halterung von mehreren Wellenschläuchen. Die Halteeinrichtung umfasst ein Oberteil und ein Unterteil, die halbkreisförmige Ausnehmungen aufweisen. Damit sich die in den Ausnehmungen eingelegten Wellenschläuche nicht verschieben können, sind Stege an den Flächen der Ausnehmungen vorgesehen, die in eine Vertiefung zwischen den Wellen des Wellenschlauchs eingreifens.

Die WO 2004/029492 A beschreibt eine Rohrschnette mit einem Oberteil und einem Unterteil. Das Oberteil ist mittels Scharnier an dem Unterteil befestigt, so dass es aufgeklappt werden kann, um ein Rohr in eine Aufnahmeöffnung einzulegen. Das Oberteil kann mittels Schnappverschluss an dem Unterteil verriegelt werden. In der Fläche der Ausnehmung sind Rippen vorgesehen, die in entsprechende Vertiefungen eines eingelegten Wellenrohrs eingreifen, so dass sich dieses Wellenrohr nicht in der Rohrschelle verschieben kann.

Der vorliegenden Erfindung liegt nun die Aufgabe zugrunde, einen Halter, ausgehend von einem Halter mit den eingangs angegebenen Merkmalen, so auszugestalten, dass er einen einfachen Aufbau aufweist, allerdings dennoch Rohre oder Schläuche sicher hält, dass er stapelfähig ist und dass er unter geringen Kosten herstellbar ist.

Gelöst wird diese Aufgabe durch einen Halter für Schläuche oder Rohre mit den Merkmalen des Anspruchs 1.

Wesentlich ist, dass der erfindungsgemäße Halter zwar zweiteilig, mit einem Unterteil und einem Oberteil, ausgebildet ist, allerdings muss, für die Herstellung dieses Halters, nur ein Teil hergestellt werden, das, aufgrund seines symmetrischen Aufbaus zu der senkrechten Mittelebene, die senkrecht zu der Verbindungsfläche verläuft, und zwar in der Richtung der Achse eines durch diesen Halter hindurchgeführten Rohrs oder Schlauchs, sowohl als Unterteil als auch als Oberteil verwendet werden kann. Dennoch ist es möglich, die beiden Teile, d.h. Oberteil und Unterteil, so zu verbinden, dass im Bereich der Verbindungsfläche ineinandergreifende Teile vorgesehen sind, Durch diese identischen Teile wird auch der Montagevorgang erleichtert, da der Monteur nicht darauf achten muss, eine entsprechende Anzahl von Unterteilen und eine entsprechende Anzahl von Oberteilen bereitzuhalten, da nur identische Teile für Unterteil und Oberteil erforderlich sind.

Die Vorsprünge und Vertiefungen werden durch Zapfen und Bohrungen gebildet, die einfach, in einer Vielfalt von Formen, gestaltet werden können. In einer einfachen Ausführungsform ist ein Zapfen auf der einen Seite der Mittelebene des Teils und eine entsprechende Bohrung auf der anderen Seite der Mittelebene des Teils ausreichend.

Die Vorsprünge und Vertiefungen greifen formschlüssig ineinander, damit Unterteil und Oberteil zueinander zentriert und ausgerichtet sind.

Um Unterteil und Oberteil zu montieren, ohne dass weitere Befestigungsmittel erforderlich sind, beispielsweise für eine Vormontage, greifen die Vorsprünge und Vertiefungen kraftschlüssig ineinander. In einer solchen Ausgestaltung wird zunächst das Unterteil an einer Unterlage montiert, das Rohr oder der Schlauch in die halbkreisförmige Nut des Unterteils eingelegt und dann ein zweites Teil, das das Oberteil bildet, auf das Unterteil so aufgesteckt, dass die Vorsprünge klemmend in den Vertiefungen aufgenommen sind. Anschließend können die beiden Teile miteinander verschraubt werden.

Die Zapfen sind als hülsenförmige Vorsprünge ausgebildet werden, die in Längsrichtung geschlitzt sind. Solche Zapfen zeigen eine gewisse Flexibilität und Nachgiebigkeit, wenn sie in die entsprechenden Bohrungen eingesetzt werden. Außerdem können diese geschlitzten Zapfen dann gespreizt und fixiert werden, wenn durch deren Innenraum ein Verschraubungselement hindurchgeführt wird.

Vorzugsweise sind die hülsenförmigen Vorsprünge von ihrem freien Ende bis zu der Verbindungsfläche hin geschlitzt, um eine maximale Flexibilität zu erreichen. Die hülsenförmigen Vorsprünge sollten in mindestens zwei Schlitze unterteilt sein; bevorzugt sind allerdings vier Schlitze, die darüber hinaus gleichmäßig über den Umfang des hülsenförmigen Vorsprungs verteilt sein sollten.

Um die beiden Teile, d.h. das Unterteil und das Oberteil, gegenseitig auch dann zu halten, wenn sie nicht miteinander verschraubt sind, auch dann, wenn ein Schlauch, Rohr oder Kabel in die Öffnung des Halters eingelegt ist, sollten die hülsenförmigen Vorsprünge im Bereich ihres freien Endes einen radial nach außen vorstehenden Wulst aufweisen, der sich dann an einer entsprechenden Abstufung in der Bohrung des anderen Teils verhakt. In einer solchen Ausführungsform des Halters ist eine Vormontage ohne zusätzliche Schraub- oder Befestigungselemente möglich.

Die dem hülsenförmigen Vorsprung zugeordnete Bohrung des jeweiligen anderen Teils von Oberteil und Unterteil kann axiale Stege aufweisen, die den Schlitzen des hülsenförmigen Vorsprungs entsprechen und sich in diese Schlitze einlegen, um die Zapfen zusätzlich in den Bohrungen zu zentrieren und zu führen.

Um mehrere Halter übereinander zu stapeln, sollte das Unterteil eine ebene Montagefläche aufweisen und die entsprechende Fläche des Oberteils sollte parallel zu dieser Montagefläche verlaufen. Gleiches gilt für die Seitenflächen des Halters, die ebenfalls parallel zueinander ausgebildet sein sollten, um mehrere dieser Halter nebeneinander montieren zu können.

Für eine einfache und schnelle Montage weist in einer Ausführungsform das Unterteil eine Montagebohrung auf, die sich von der kreisbogenförmigen Nut bis zu der Montagefläche erstreckt, vorzugsweise entlang der Mittelebene. Da, wie eingangs erwähnt, vorzugsweise Unterteil und Oberteil im Wesentlichen identische Teile sind, weist das Oberteil des Halters eine entsprechende Bohrung auf, die aber dann nicht genutzt wird.

Für eine zusätzliche Befestigung des Halters sind beidseitig der Aufnahmeöffnung durchgehende Bohrungen vorgesehen; diese Bohrungen können auch dann verwendet werden, wenn mehrere Halter übereinander gestapelt werden, um dann durch diese seitlichen Bohrungen beidseitig der Aufnahmeöffnung Gewindestangen hindurchzuführen.

Diese seitlichen Bohrungen können auch, von der Verbindungsfläche aus gesehen, als Sacklochbohrungen oder Bohrungen mit einem öffnungsseitig vergrößerten Durchmesser ausgebildet werden, um das Unterteil mittels Schrauben an einer Unterlage befestigen zu können, derart, dass sich die Schraubenköpfe in die Sacklochbohrungen einlegen und nicht über die Verbindungsfläche vorstehen.

Falls die Bohrungen von der Montagefläche aus gesehen als Sacklochbohrungen oder Bohrungen mit einem öffnungsseitig vergrößerten Durchmesser ausgebildet sind, können dann, wenn Oberteil und Unterteil montiert sind, Schrauben von der Außenfläche des Oberteils aus in die durchgehenden Bohrungen eingesetzt werden, so, dass sich die Schraubenköpfe in die Sacklochbohrungen einlegen.

Im Bereich der Verbindungsfläche des Unterteils und/oder des Oberteils kann ein bis zu der Außenfläche reichender, vertiefter Bereich vorgesehen werden. Dieser vertiefte Bereich bildet dann, wenn Unterteil und Oberteil miteinander verbunden sind, einen von der Außenseite zugänglichen Schlitz, in den ein Werkzeug, beispielsweise ein Schraubenzieher, eingesetzt werden kann, um die beiden Teile voneinander zu lösen, um so das Oberteil von dem Unterteil wieder abnehmen zu können.

Weitere Einzelheiten und Merkmale ergeben sich aus der nachfolgenden Beschreibung anhand eines Ausführungsbeispiels. In der Zeichnung zeigt
- Figur 1: eine perspektivische Ansicht eines Halters mit Oberteil und Unterteil,
- Figur 2: den Halter der Figur 1, wie er an einer Halteschiene befestigt wird,
- Figur 3: den Halter der Figur 2 mit Halteschiene in einer Explosionsdarstellung,
- Figur 4A: eine Seitenansicht des Unterteils des Halters der Figuren 1 bis 3, wobei die inneren Ausnehmungen, Vertiefungen und Bohrungen mit unterbrochenen Linien angedeutet sind,
- Figur 4B: eine Ansicht auf den Halter der Figur 4A aus Richtung des Sichtpfeils 4B in Figur 4A,
- Figur 4C: eine Ansicht auf den Halter der Figur 4A aus Richtung des Sichtpfeils 4C in Figur 4A,
- Figur 4D: eine perspektivische Ansicht des Unterteils, wie es in Figur 4A gezeigt ist, von schräg oben,
- Figur 5: eine Halteschiene mit zwei Reihen von Haltern, die Aufnahmeöffnungen mit unterschiedlichen Durchmessern zum Halten unterschiedlicher Schläuche oder Rohre aufweisen,

- Figur 6A: eine perspektivische Ansicht eines Unterteils mit einem gegenüber dem Beispiel der Figuren 1 bis 4 geänderten Zapfen,
- Figur 6B: eine perspektivische Ansicht auf das Untertei!, das zu dem Unterteil der Figur 6A passt bzw. zu diesem identisch ist, und
- Figur 6C: eine Draufsicht auf die äußere Seite des Oberteils, das einen dem Unterteil, wie es in den Figuren 6A und 6B dargestellt ist, entsprechenden Aufbau be- sitzt.

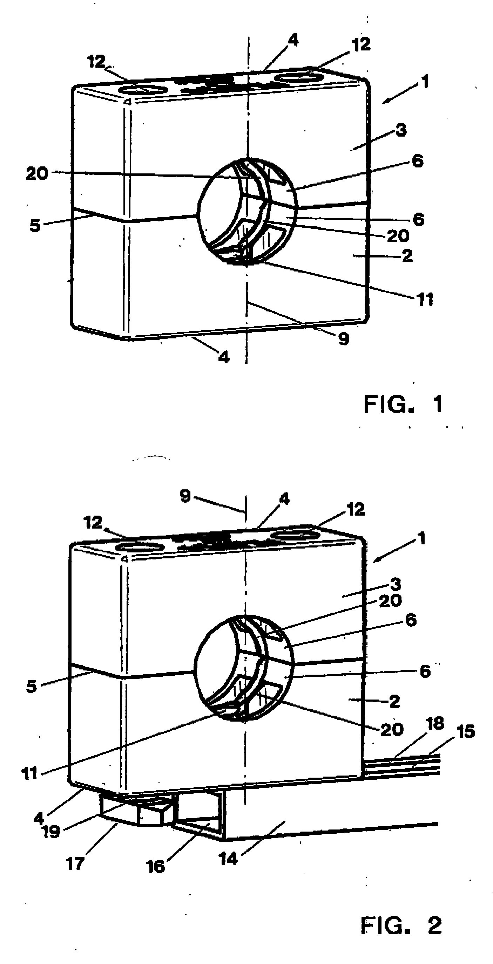

Die Figuren 1 und 2 zeigen einen Halter 1 für Schläuche oder Rohre, der aus einem Unterteil 2 und einem Oberteil 3 besteht. Bei dem Unterteil 2 und dem Oberteil 3 handelt es sich um identische Teile, die eine Grundfläche 4 aufweisen und die auf der dieser Grundfläche 4 gegenüberliegenden Seite, im Bereich der Verbindungsfläche 5 der beide Teile 2, 3, eine halbkreisförmige Nut 6 aufweisen. Die beiden halbkreisförmigen Nuten 6 ergänzen sich im montierten Zustand des Halters 1 zu einer kreisförmigen Aufnahmeöffnung.

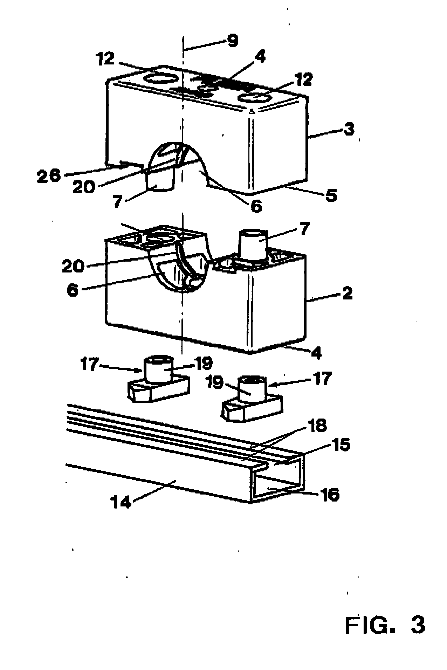

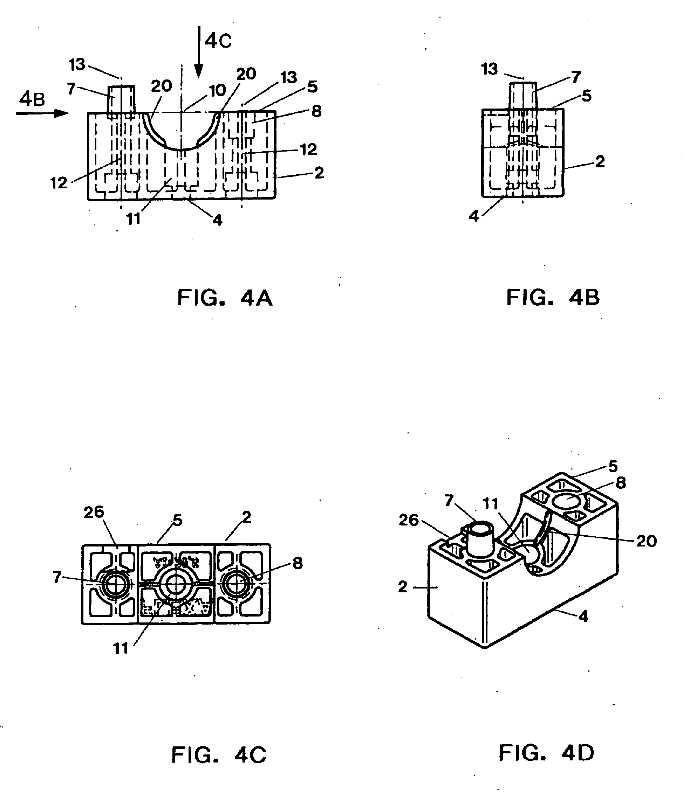

Wie in näherem Detail anhand der Figur 3 und insbesondere anhand der Figuren 4A bis 4D zu sehen ist, ist im Bereich der Verbindungsfläche 5 sowohl ein Zapfen 7 als auch eine Bohrung 8 vorgesehen. Zapfen 7 und Bohrungen 8 sind unter gleichen Abständen zu einer Mittelebene 9, die senkrecht zu der Verbindungsfläche 5 verläuft und mit der Achse 10 der halbkreisförmigen Nut 6 zusammenfällt, positioniert. Aufgrund dieser Verbindungselemente, d.h. des Zapfens 7 und der Bohrungen 8, können für das Unterteil 2 und das Oberteil 3 identische Teile, beispielsweise Spritzgussteile aus Kunststoff, verwendet werden. Um Unterteil 2 und Oberteil 3 miteinander zu verbinden, müssen die Teile um 180° gedreht werden, so dass jeweils, wie die Figur 3 zeigt, der Zapfen 7 des Unterteils 2 zu der entsprechenden Bohrung 8 des Oberteils 3 und die entsprechende Bohrung 8 des Unterteils 2 zu dem entsprechenden Zapfen 7 des Oberteils 3 ausgerichtet sind, um dann die beiden Teile derart miteinander zu verbinden, dass die jeweiligen Zapfen 7 in die jeweiligen Bohrungen 8 formschlüssig eingreifen. Zusätzlich ist, insbesondere anhand der Figuren 4A und 4B, zu erkennen, dass sich die Zapfen 7, die einen kreisrunden Querschnitt haben, zu dem freien Ende hin konisch leicht verjüngen, so dass beim Einstecken der Zapfen 7 in die Bohrungen 8 nicht nur ein Formschluss, sondern auch ein Kraftschluss, erreicht werden kann, indem die konische Basis der jeweiligen Zapfen 7 geringfügig im Durchmesser größer ausgebildet ist als der Durchmesser der Öffnungen 8.

Weiterhin ist anhand der Figuren, insbesondere der Figuren 4A bis 4D, zu erkennen, dass Unterteil 2 und Oberteil 3 des Halters 1 glatte Außenflächen aufweisen, während der Innenbereich mit Stegen und Hohlräumen dazwischen strukturiert ist, damit das Bauteil mit einem geringen Gewicht unter einer möglichst großen Materialeinsparung hergestellt werden kann.

Der Halter 1, wie er in den Figuren gezeigt ist, bietet verschiedene Möglichkeiten der Befestigung. Zum einen ist in dem Unterteil 2 eine Montagebohrung 11 vorgesehen, die einen erweiterten Durchmesser zu der halbkreisförmigen Nut 6 hin besitzt. In diese Montagebohrung 11 kann eine Schraube eingesetzt werden, um dieses Unterteil 2 an einer Unterlage zu verschrauben, wobei aufgrund des erweiterten Bereichs der Bohrung ein entsprechender Schraubenkopf so versenkt aufgenommen wird, dass er nicht in die halbkreisförmige Nut 6 vorsteht. Weiterhin sind zwei zusätzliche, durchgehende Bohrungen 12 beidseitig der halbkreisförmigen Nut 6 ausgebildet, wobei die Achsen 13 dieser durchgehenden Bohrungen 12 mit der Achse des Zapfens 7 und der Achse der Bohrung 8 zusammenfallen. Von der Grundfläche 4 aus gesehen weisen diese durchgehenden Bohrungen 12 einen erweiternden Durchmesser 12 auf, um in diesem erweiternden Bereich einen Schraubenkopf aufzunehmen, wenn ein solches Teil als Oberteil 3 verwendet wird. In einem solchen Fall können über diese beiden Bohrungen 12 (siehe Figur 1) zusätzliche Schrauben hindurchgeführt und an einer Unterlage verschraubt werden, um zum einen diesen Halter 1 an einer Grundfläche zu befestigen und um zum anderen Unterteil 2 und Oberteil 3 unlösbar miteinander zu verschrauben. Falls mehrere dieser Halter 1 übereinander gestapelt werden, können durch diese Bohrungen 12 zum Beispiel Gewindestangen hindurchgeführt werden, um diese übereinander gestapelten Halter 1 miteinander und an einer Auflage zu verschrauben.

Eine weitere Möglichkeit der Befestigung ist in Figur 2 dargestellt. Figur 2 zeigt eine Befestigung, bei der eine Montageschiene 14 eingesetzt wird, die an einer Wandfläche, einem Träger, oder einer sonstigen Grundfläche angeschraubt wird. Diese Montageschiene 14 weist einen kastenförmigen Querschnitt auf mit einer nutförmigen Öffnung 15 an der Oberseite. In den Innenraum 16 der Montageschiene 14 werden Halteteile 17 eingesetzt, die die beiden Randstreifen 18, die die Nut 15 der Montageschiene 14 begrenzen, hintergreifen. Diese Halteteile 17 besitzen einen Fortsatz 19 mit Innengewinde, der sich in die Nut 15 einlegt. Dieser zylindrische Fortsatz 19 besitzt einen Durchmesser, der der Sacklochbohrung der durchgehenden Bohrung 12 entspricht. Um einen Halter 1 an der Montageschiene 14 zu befestigen, wird der Halter 1 so vorbereitet, wie dies in Figur 2 dargestellt ist. Das Unterteil 2 mit den eingesetzten Halteteilen 17 wird von dem offenen Ende der Schiene 14 aus eingeführt, wie dies die Figur 2 in einer Zwischenposition zeigt, ein Schlauch oder ein Rohr wird in die halbkreisförmige Nut 6 des Unterteils 2 eingelegt, anschließend wird das Oberteil 3 auf das Unterteil so aufgesetzt, dass die jeweiligen Zapfen 7 und Bohrungen 8 ineinandergreifen, und anschließend werden von der Oberseite des Oberteils 3 aus Schrauben in die durchgehenden Bohrungen 12 eingesetzt, um diese dann in dem Gewinde des Fortsatzes 19 der Halteteile 17 zu verschrauben. Dadurch werden die Halteteile 17 in der Schiene 14 festgeklemmt, um den Halter 1 an Ort und Stelle zu halten. Durch Lösen der nicht näher dargestellten Schrauben in den durchgehenden Bohrungen 12 kann der Halter 1 entlang der Schiene 14 verschoben werden.

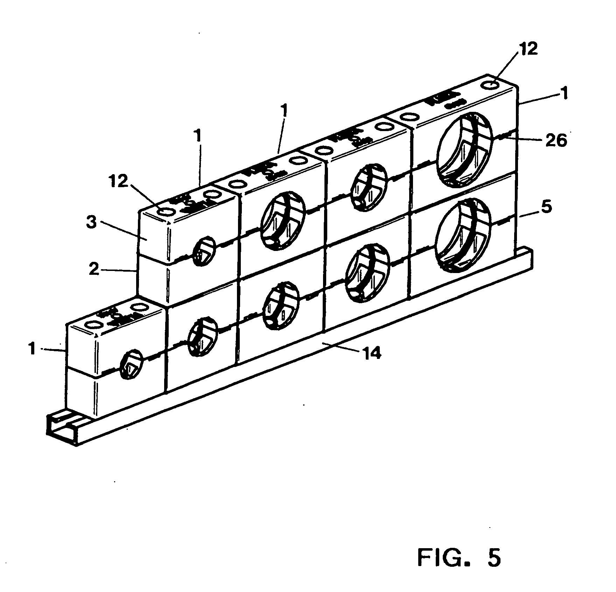

In Figur 5 ist, in einer perspektivischen Darstellung, eine Montageschiene 14, wie sie auch in Figur 2 gezeigt ist, dargestellt, an der mehrere Halter 1 nebeneinander und übereinander befestigt sind. Hierzu sind Halteteile 17 eingesetzt, die in Figur 5 nicht zu sehen sind, die denjenigen entsprechen, die in den Figuren 2 und 3 zu sehen sind. Wenn zwei Halter 1 übereinander an der Montageschiene 14 montiert werden sollen, werden entsprechend lange Schraubelemente in die durchgehenden Bohrungen 12 eingeführt und in den Fortsätzen 19 der Halteteile 17 verschraubt. Figur 5 zeigt weiterhin die Möglichkeit, dass unterschiedliche Halter 1 vorgesehen werden können, um Rohre oder Schläuche mit unterschiedlichem Durchmesser aufzunehmen. Für jeden Schlauch- oder Rohrdurchmesser muss allerdings nur jeweils ein Teil gefertigt werden, das, aufgrund des symmetrischen Aufbaus der Unterteile und Oberteile 2, 3 zu der Mittelebene 9 (siehe Figur 4A), sowohl als Unterteil 2 als auch als Oberteil 3 verwendbar ist.

Die Halter 1, wie sie in den Figuren dargestellt sind, besitzen eine quadratische Fläche, aus Richtung der Achse 10 gesehen; d.h. jeder Halter 1 weist parallele Grundflächen 4 sowie parallele Seitenflächen auf, so dass mehrere dieser Halter 1 bündig nebeneinander und übereinander positioniert werden können. Falls mehr als zwei Reihen solcher Halter 1 übereinander gestapelt werden sollen, müssen nur entsprechend lange Befestigungselemente verwendet werden, um sie von dem obersten Halter 1 aus in die Bohrungen 12 einzusetzen, so dass sie bis zu den Halteteilen 17 in der Schiene 14 reichen.

Falls in den Haltern 1 sogenannte Wellenschläuche gehalten werden sollen, die entlang ihrer Oberfläche wellenförmige, radiale Erhebungen und Vertiefungen aufweisen, kann im Bereich der halbkreisförmigen Nut 6 ein Steg 20 (oder auch mehrere Stege 20) angespritzt werden, der über die Grundfläche der halbkreisförmigen Nut 6 vorsteht und sich in eine Vertiefung eines solchen Wellenschlauchs einlegt, so dass der Wellenschlauch bereits aufgrund dieses Stegs 20 in dem Halter gehalten wird, ohne dass die Flächen der halbkreisförmigen Nuten 6 an der Außenseite des Wellenschlauchs anliegen müssen. Solche Stege 20 sind in den einzelnen Figuren, insbesondere aber auch in den Figuren 4A und 4D, zu sehen.

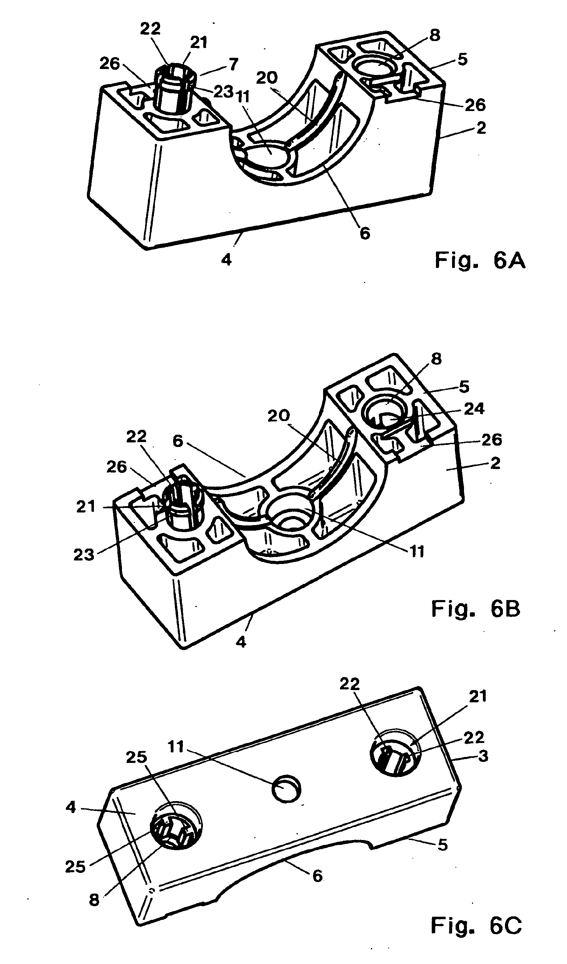

Die erfindungsgemäße Ausführungsform des Halters, mit Oberteil und Unterteil, wie sie in den Figuren 6A und 6B dargestellt ist, unterscheidet sich von dem Beispiel gemäß Figuren 3 und 4 durch eine geänderte Form des Zapfens 7, wobei in der Ausführungsform der Figuren 6A bis 6C der Zapfen als hülsenförmiger Vorsprung 21 ausgebildet ist. Dieser hülsenförmige Vorsprung 21 ist darüber hinaus in Längsrichtung an vier Stellen mit Schlitzen 22 geschlitzt, so dass sich die vier dadurch ergebenden Abschnitte des hülsenförmigen Vorsprungs 21 in radialer Richtung biegen können. Weiterhin ist an dem freien Ende dieses hülsenförmigen Vorsprungs 21 ein radial nach außen weisender Wulst 23 angeordnet. Wie in Figur 6B zu erkennen ist, ist die entsprechende Bohrung 8 mit einer Abstufung 24 so versehen, dass sich die Bohrung 8, von der Verbindungsfläche 5 aus gesehen, radial nach außen im Bereich dieser Abstufung 24 erweitert; diese Abstufung 24 wird beim Verbinden des Unterteils 2 mit dem Oberteil 3 durch den Wulst 23 des hülsenförmigen Vorsprungs 21 hintergriffen. Beim Einstecken des hülsenförmigen Vorsprungs 21 in die Bohrung 8 können sich dazu die einzelnen Arme des hülsenförmigen Vorsprungs 21, die aufgrund der Schlitze 22 gebildet sind, nach innen biegen, so dass der Durchmesser des hülsenförmigen Vorsprungs 21 verkleinert wird, damit der Vorsprung 21 in die Bohrung 8 eingeführt werden kann, bis die beiden Verbindungsflächen 5 zur Anlage kommen und der Wulst 23 an dem hülsenförmigen Vorsprung 21 die Abstufung 24 hintergreift. Hierdurch ist eine Vormontage der beiden Teile, d.h. des Unterteils 2 und des Oberteils 3, ohne weitere Befestigungselemente möglich. Zusätzlich sind in den Bohrungen 8, sich an die Abstufung 24 anschließend, Stege 25 vorgesehen, die sich radial eine Strecke entlang der Bohrungswand erstrecken. Auf diese Stege 25 legt sich ein Schraubenkopf (nicht dargestellt) auf, wenn das Oberteil 3 und das Unterteil 2, aufeinandergesetzt, an einer Unterlage verchraubt werden.

Wie anhand der Figuren 6A und 6B zu ersehen ist, sind Oberteil und Unterteil, entsprechend der Mittelebene 5, symmetrisch aufgebaut.

Wie in den Figuren 3, 4C, 4D und 6A, 6B zu sehen ist, sind sowohl an dem Unterteil 2 als auch an dem Oberteil 3 im Bereich der Verbindungsfläche 5, seitlich des Zapfens 7, vertiefte Bereiche 26 ausgebildet. In diese vertieften Bereiche 26, die dann, wenn Oberteil 2 und Unterteil 3 miteinander verbunden sind, einen Schlitz bilden, dienen dazu, ein Werkzeug, beispielsweise einen Schraubenzieher, anzusetzen, um die miteinander verbundenen Teile zu lösen. Diese vertieften Bereiche 26 sind insbesondere in der Ausführungsform nützlich, wie sie in den Figuren 6A bis 6C dargestellt ist, da der hülsenförmige Vorsprung 21 mit der korrespondierenden Bohrung 8 sowohl form- als auch kraftschlüssig in Eingriff steht.

## Patentansprüche

1. Halter für Schläuche oder Rohre
mit einem Unterteil (2) und einem darauf aufgesetzten Oberteil (3), die durch im Wesentlichen identische Teile gebildet sind,
wobei sowohl Unterteil (2) als auch Oberteil (3) im Bereich einer Verbindungsfläche (5) jeweils eine kreisbogenförmige Nut (6) aufweisen, die sich zu einer einen Schlauch oder ein Rohr aufnehmenden Aufnahmeöffnung ergänzen,
wobei im Bereich der Verbindungsfläche (5) von Oberteil (3) und Unterteil (2) jeweils mindertens ein Zapfen (7) und jeweils mindestens eine Bohrung (8) ausgebildet sind, die ineinandergreifende Elemente (7, 8) bilden,
wobei der Zapfen (7) bzw. die Bohrung (8) auf der einen Seite zu einer senkrechten Mittelebene, die senkrecht zu der Verbindungsfläche verläuft, einer korrespondierenden Bohrung (8) bzw. einem korrespondierenden Zapfen (7) auf der anderen Seite der Mittelebene entspricht, und
wobei Montagebohrungen (11) ausgebildet sind, um zumindest das Unterteil an einer Mantagestelle zu montieren, wobei
die Zapfen (7) und Bohrungen form- und kraftschlüssig ineinandergreifen und die Zapfen (7) als hülsenförmige Teile (21) ausgebildet sind, die in Längsrichtung geschlitzt sind.

2. Halter nach Anspruch 1, **dadurch gekennzeichnet, dass** die hülsenförmigen Zapfen (21) von ihrem freien Ende bis zu der Verbindungsfläche (5) hin geschlitzt sind.

3. Halter nach Anspruch 1 oder 2, **dadurch gekennzeichnet, dass** die hülsenförmigen Zapfen (21) durch mindestens zwei Schlitze (22) unterteilt sind.

4. Halter nach Anspruch 3, **dadurch gekennzeichnet, dass** die hülsenförmigen Zapfen (21) durch vier Schlitze (22) unterteilt sind.

5. Halter nach einem der Ansprüche 1 bis 4, **dadurch gekennzeichnet, dass** die hülsenförmigen Zapfen (21) im Bereich ihres freien Endes einen radial nach außen vorstehenden Wulst (23) aufweisen.

6. Halter nach Anspruch 5, **dadurch gekennzeichnet, dass** der Wulst des hülsenförmigen Zapfens (21) eine entsprechende Abstufung (24) in der Bohrung (8) des anderen Teils (2, 3) hintergreift.

7. Halter nach einem der Ansprüche 1 bis 6, **dadurch gekennzeichnet, dass** die dem hülsenförmigen Zapfen (21) zugeordnete Bohrung (8) des jeweiligen anderen Teils von Oberteil (3) und Unterteil (2) axiale Stege (25) aufweist, die den Schlitzen (22) des hülsenförmigen Zapfens (21) entsprechen und sich in diese Schlitze (22) einlegen.

8. Halter nach einem der Ansprüche 1 bis 7, **dadurch gekennzeichnet, dass** das Unterteil (2) eine ebene Montagefläche (4) aufweist und die entsprechende Fläche (4) des Oberteils (3) parallel zu dieser Montagefläche (4) verläuft,

9. Halter nach einem der Ansprüche 1 bis 8, **dadurch gekennzeichnet, dass** eine Montagebohrung (11) vorgesehen ist, die sich von der kreisbogenförmigen Nut (6) bis zu der Montagefläche (4) erstreckt.

10. Halter nach einem der Ansprüche 1 bis 9, **dadurch gekennzeichnet, dass** beidseitig der Aufnahmeöffnung durchgehende Montagebohrungen (12) vorgesehen sind.

11. Halter nach Anspruch 10, **dadurch gekennzeichnet, dass** die Montagebohrungen (12) von der Verbindungsfläche (5) aus gesehen als Sacklochbohrungen oder Bohrungen mit abgestuftem Durchmesser ausgebildet sind.

12. Halter nach Anspruch 10 oder 11, **dadurch gekennzeichnet, dass** die Montagebohrungen (12) von der Montagefläche (4) aus gesehen als Sacklochbohrungen ausgebildet sind.

13. Halter nach einem der Ansprüche 1 bis 12, **dadurch gekennzeichnet, dass** im Bereich der Verbindungsfläche des Unterteils (2) und/oder des Oberteils (3) ein bis zu der Außenfläche vertiefter Bereich (26) ausgebildet ist, der zwischen Unterteil (2) und Oberteil (3) einen von der Außenseite zugänglichen Schlitz bilden.

## Claims

1. A holder for hoses or pipes
comprising a lower part (2) and an upper part (3) mounted thereon, which parts are formed by substantially identical parts,
wherein both lower part (2) and upper part (3) are each provided in the area of a connection surface (5) with a groove (6) in the form of a circular arc, with the grooves supplementing each other to form an accommodating opening accommodating a hose or a pipe,
wherein in the area of the connection surface (5) of upper part (3) and lower part (2) at least one respective pin (7) and at least one respective bore (8) are configured to form elements (7, 8) engaging each other,
wherein the pin (7) and the bore (8), respectively, at the one side relative to a vertical mid-plane extending in a direction perpendicular to the connection surface conform to a corresponding bore (8) and a corresponding pin (7), respectively, at the other side of the mid-plane, and
wherein mounting bores (11) are formed for mounting at least the lower part at a mounting place, wherein
the pins (7) and bores (8) engage each other in a form fit and force-closed manner, and the pins (7) are configured as sleeve-shaped parts (21) slotted in longitudinal direction.

2. The holder according to claim 1, **characterized in that** the sleeve-shaped pins (21) are slotted from their free end up to the connection surface (5).

3. The holder according to claim 1 or 2, **characterized in that** the sleeve-shaped pins (21) are subdivided by at least two slots (22).

4. The holder according to claim 3, **characterized in that** the sleeve-shaped pins (21) are subdivided by four slots (22).

5. The holder according to any one of claims 1 to 4, **characterized in that** the sleeve-shaped pins (21) are provided in the area of their free end with a radially outwardly projecting bead (23).

6. The holder according to claim 5, **characterized in that** the bead of the sleeve-shaped pin (21) grips behind a corresponding step (24) in the bore (8) of the other part (2, 3).

7. The holder according to any one of claims 1 to 6, **characterized in that** the bore (8) of the respective other part of upper part (3) and lower part (2), which bore is assigned to the sleeve-shaped pin (21), comprises axial webs (25) that conform to the slots (22) of the sleeve-shaped pin (21) and nestle in said slots (22).

8. The holder according to any one of claims 1 to 7, **characterized in that** the lower part (2) comprises a flat mounting surface (4) and the corresponding surface (4) of the upper part (3) extends in parallel with said mounting surface (4).

9. The holder according to any one of claims 1 to 8, **characterized in that** a mounting bore (11) is provided extending from the groove (6) in the form of a circular arc up to the mounting surface (4).

10. The holder according to any one of claims 1 to 9, **characterized in that** continuous mounting bores (12) are provided at both sides of the accommodating opening.

11. The holder according to claim 10, **characterized in that** the mounting bores (12) as viewed from the connection surface (5) are formed as blind holes or bores of stepped diameter.

12. The holder according to claim 10 or 11, **characterized in that** the mounting bores (12) as viewed from the mounting surface (4) are formed as blind holes.

13. The holder according to any one of claims 1 to 12, **characterized in that** in the area of the connection surface of the lower part (2) and/or the upper part (3) an area (26) is formed that is recessed up to the outer surface and forms a slot accessible from the outside between lower part (2) and upper part (3).

## Revendications

1. Support pour tuyaux flexibles ou tubes
avec une partie inférieure (2) et une partie supérieure (3) placée dessus qui sont formées essentiellement par des parties identiques,
la partie inférieure (2) ainsi que la partie supérieure (3) présentant dans la zone d'une surface de liaison (5) respectivement une rainure (6) en forme d'arc de cercle qui se complètent en une ouverture pouvant loger un tuyau flexible ou un tube,
dans la zone de la surface de liaison (5) de la partie supérieure (3) et de la partie inférieure (2) respectivement au moins un tenon (7) et un perçage (8) étant prévus pour former des éléments (7, 8) engagés mutuellement,
le tenon (7) respectivement le perçage (8) correspondant sur une face d'un plan médian perpendiculaire qui s'étend perpendiculairement à la surface de liaison à un perçage (8) correspondant, respectivement à un tenon correspondant (7) de l'autre côté du plan médian et
des perçages de montage (11) étant ménagés pour monter au moins la partie inférieure sur un emplacement de montage,
les tenons (7) et perçages (8) étant engagés entre eux par adhérence et par blocage mécanique et les tenons (7) étant réalisés comme des pièces en forme de douille (21) qui sont fendues dans le sens de la longueur.

2. Support selon la revendication 1, **caractérisé en ce que** les tenons en forme de douille (21) sont fendus de leur extrémités libres jusqu'à la surface de liaison (5).

3. Support selon la revendication 1 ou 2, **caractérisé en ce que** les tenons en forme de douille (21) sont divisés par au moins deux fentes (22).

4. Support selon la revendication 3, **caractérisé en ce que** les tenons en forme de douille (21) sont divisés par quatre fentes (22).

5. Support selon l'une des revendications 1 à 4, **caractérisé en ce que** les tenons en forme de douille (21) présentent dans la zone de leur extrémité libre un bourrelet (23) faisant saillie radialement vers l'extérieur.

6. Support selon la revendication 5, **caractérisé en ce que** le bourrelet du tenon en forme de douille (21) s'applique par l'arrière contre un dégradé correspondant (24) dans le perçage (8) de l'autre partie (2, 3).

7. Support selon l'une des revendications 1 à 6, **caractérisé en ce que** le perçage (8) associé au tenon en forme de douille (21) de l'autre partie respective de la partie supérieure (3) et de la partie inférieure (2) présente des traverses axiales (25) qui correspondent aux fentes (22) du tenon en forme de douille (21) et qui s'engagent dans ces fentes (22).

8. Support selon l'une des revendications 1 à 7, **caractérisé en ce que** la partie inférieure (2) présente une surface de montage plane (4) et la surface correspondante (4) de la partie supérieure (3) s'étend parallèlement à cette surface de montage (4).

9. Support selon l'une des revendications 1 à 8, **caractérisé en ce qu'**il est prévu un perçage de montage (11) qui s'étend de la rainure en forme d'arc de cercle (6) jusqu'à la surface de montage (4).

10. Support selon l'une des revendications 1 à 9, **caractérisé en ce que** des deux côtés de l'ouverture de logement, il est prévu des perçages de montage continus (12).

11. Support selon la revendication 10, **caractérisé en ce que** les perçages de montage (12) sont réalisés comme des trous borgnes ou des trous avec des diamètres dégradés, vu depuis la surface de liaison (5).

12. Support selon la revendication 10 ou 11, **caractérisé en ce que** les perçages de montage (12) sont réalisés comme des trous borgnes, vu depuis la surface de montage (4).

13. Support selon l'une des revendications 1 à 12, **caractérisé en ce que** dans la zone de la surface de liaison de la partie inférieure (2) et/ou de la partie supérieure (3), il est réalisé une zone plus profonde (26) jusqu'à la surface externe qui forme entre la partie inférieure (2) et la partie supérieure (3) une fente accessible depuis la face externe.
